# EUROPEAN PATENT APPLICATION

(11) **EP 2 253 818 A2**
(43) Date of publication of application: **24.11.2010**
(21) Application number: 10162477.3
(22) Date of filing: 11.05.2010
(51) Int. Cl.: F02C 3/10, F01D 5/14

(54) **Two-shaft gas turbine**

(30) Priority: 19.05.2009 JP 2009120461; 08.04.2010 JP 2010089123
(71) Applicant: Hitachi Ltd., Tokyo 100-8280 (JP)
(72) Inventor: Myoren, Chihiro, Tokyo 100-8220 (JP); Akiyama, Ryou, Tokyo 100-8220 (JP)
(74) Representative: MERH-IP Matias Erny Reichl Hoffmann

(57) **Abstract**

On a two-shaft gas turbine 1, on at least one of an inner peripheral side or an outer peripheral side of a main flow passage, an outlet of a high-pressure turbine 4 is lower than an inlet of a low-pressure turbine 5, an outer periphery of a flow channel that connects the outlet of the high-pressure turbine 4 and the inlet of the low-pressure turbine 5 includes a first casing shroud 44 that is supported by a casing 12 and located on an outer peripheral side of a final-stage rotor vane 42 of the high-pressure turbine 4, and an initial-stage stator vane 51 of the low-pressure turbine 5, and a connection position of the first casing shroud 44 and the initial-stage stator vane 51 of the low-pressure turbine 5 is closer to the inlet of the initial-stage stator vane 51 of the low-pressure turbine 5 than the outlet of the final-stage rotor vane 42 of the high-pressure turbine 4.

## Description

### FIELD OF THE INVENTION

The present invention relates to a two-shaft gas turbine having a plurality of turbines different in shaft, that is, a high-pressure turbine for driving a compressor and a low-pressure turbine for driving a load.

### BACKGROUND OF THE INVENTION

An increase in demand for energy in recent years has led to an increasing demand for a gas turbine for driving a machine suitable for production of a liquefied natural gas (LNG). In an LNG plant, a natural gas is increased in pressure by an LNG liquefying compressor to achieve liquefaction. A two-shaft gas turbine is frequently used for driving the LNG compressor. In the two-shaft gas turbine, a turbine portion is divided into a low-pressure turbine and a high-pressure turbine. The low-pressure turbine drives a load such as an LNG compressor or a power generator, and the high-pressure turbine is connected to the compressor. The two-shaft gas turbine has a feature that the respective turbines on a high-pressure side and a low-pressure side are different in the rotating shaft.

The two-shaft gas turbine may be used not only as a gas turbine for driving a machine as described above, but also as a gas turbine for power generation which is connected to the power generator. A single-shaft gas turbine in which the compressor and the turbine rotate about the same shaft is major as the power generation gas turbine. This is because the single-shaft gas turbine is simple in structure and easily operated. However, when the device is downsized, it is necessary to maintain the number of rotations that conforms to the specification of the power generator, which disadvantageously requires a reducer.

On the other hand, when the two-shaft gas turbine is used for power generation, because the number of rotations of each of the high-pressure turbine and the low-pressure turbine can be arbitrarily selected, no reducer is required. The two-shaft gas turbine can provide compact and high-efficient gas turbines.

The two-shaft gas turbine including an example of the above-mentioned power generation gas turbine is generally so designed as to downsize the high-pressure turbine side in which the number of rotations of a connected device is not limited. This is because, in the low-pressure turbine coaxially connected to the power generator or the driven machine, the number of rotations is limited by those devices. For that reason, a rated speed of the high-pressure turbine is higher than a rated speed of the low-pressure turbine. In this case, the positions of an inner diameter and an outer diameter of an initial-stage stator vane of the low-pressure turbine are higher than those of a final-stage rotor vane of the high-pressure turbine. In order to cope with this design, an intermediate flow channel is disposed between the high-pressure turbine and the low-pressure turbine.

In formation of the intermediate flow channel, a component that configures the intermediate flow channel is generally added. A technique by which the initial-stage stator vane of the high-pressure turbine is elongated toward an upstream side is also studied as disclosed in JP-A-2008-82323.

Also, as disclosed in JP-A-2006-112374 and JP-A-2005-69167, the rated speeds of the high-pressure turbine and the low-pressure turbine are made to coincide with each other, and the positions of the inner diameters and the outer diameters of the initial-stage stator vane of the low-pressure turbine and the final-stage rotor vane of the high-pressure turbine are made to coincide with each other to suppress an increase in the number of parts.

### SUMMARY OF THE INVENTION

However, when the rated speeds of the high-pressure turbine and the low-pressure turbine are made to coincide with each other as disclosed in JP-A-2006-112374 and JP-A-2005-69167, the rated speed can hardly be changed in the high-pressure turbine and the low-pressure turbine. This requires a reducer and makes it difficult to provide a compact and high-efficient gas turbine.

On the other hand, in the technique of JP-A-2008-82323, although the compact gas turbine can be provided, and the reducer can be deleted, because the initial-stage stator vane of the low-pressure turbine is elongated toward the upstream side to configure the flow channel, the initial-stage stator vane is upsized and complicated. In general, the initial-stage stator vane of the low-pressure turbine is formed of a precision casting vane. When the upsized and complicated precision casing vane is applied, an increase in the number of dies or a reduction in the yield of the complicated configuration causes the manufacturing costs to increase. Further, because a fulcrum point at which the initial-stage stator vane of the low-pressure turbine is supported on the upstream side is away from the stator vane, in the case where a thermal expansion difference occurs between the stator vane and the fulcrum point, a stress exerted on the fulcrum point of a front edge or the like is increased so that the reliability may be reduced.

Under the circumstance, an object of the present invention is to provide a compact and high-efficient two-shaft gas turbine while suppressing an increase in the costs and a reduction in the reliability.

To achieve the above object, according to an aspect of the present invention, there is provided a two-shaft gas turbine, including a compressor that compresses air; a combustor that burns the air compressed by the compressor and fuel to generate a combustion gas; a high-pressure turbine that is driven by the combustion gas generated by the combustor; and/or a low-pressure turbine that is driven by a gas exhausted from the high-pressure turbine in which a first shaft which is a shaft of the compressor and the high-pressure turbine, and a second shaft which is a shaft of the low-pressure turbine are different from each other, wherein on at least one of an inner peripheral side and an outer peripheral side of a main flow passage, an outlet of the high-pressure turbine is lower than an inlet of the low-pressure turbine, an outer periphery of a flow channel that connects the outlet of the high-pressure turbine and the inlet of the low-pressure turbine includes a first casing shroud that is supported by a casing and located on an outer peripheral side of a final-stage rotor vane of the high-pressure turbine, and the initial-stage stator vane of the low-pressure turbine, and/or a connection position of the first casing shroud and the initial-stage stator vane of the low-pressure turbine is closer to the inlet of the initial-stage stator vane of the low-pressure turbine than the outlet of the final-stage rotor vane of the high-pressure turbine.

According to an aspect of the present invention, there can be provided the compact and high-efficient two-shaft gas turbine while suppressing an increase in the costs and a reduction in the reliability.

### BRIEF DESCRIPTION OF THE DRAWINGS

Embodiments of the present invention will be described in detail based on the following figures, in which:
Fig. 1 is a schematic diagram illustrating a meridional section of a final stage of a high-pressure turbine and an initial stage of a low-pressure turbine according to a first embodiment of the present invention;
Fig. 2 is a configuration diagram illustrating a cycle of a two-shaft gas turbine according to the first embodiment of the present invention;
Fig. 3 is a schematic diagram illustrating a meridional section of a final stage of a high-pressure turbine and an initial stage of a low-pressure turbine according to a second embodiment of the present invention;
Fig. 4 is a detail diagram of a meridional section of a turbine side of a two-shaft gas turbine in a comparative example;
Fig. 5 is a detail diagram of a meridional section of the turbine side of the two-shaft gas turbine in the first embodiment; and
Fig. 6 is a detail diagram of a meridional section of the turbine side of the two-shaft gas turbine in the second embodiment.

### DETAILED DESCRIPTION OF THE PREFERRED EMBODIMENTS

In a two-shaft gas turbine according to an embodiment of the present invention, an outer peripheral side of an intermediate flow channel between a high-pressure turbine and a low-pressure turbine is configured by a casing shroud of a high-pressure turbine final-stage rotor vane so that the intermediate flow channel can be formed with a simple configuration as compared with JP-A-2008-82323. Further, because the stator vane is not elongated to an upstream side, the above-mentioned stress does not increase, and high reliability can be maintained. In addition, since a configuration of the intermediate flow channel has two circular truncated cones larger in slope on the outer peripheral side, the separation of a flow or the generation of a shock wave due to a rapid change in a sectional area of the flow channel is suppressed so that aerodynamically advantageous flow channel configuration can be provided.

Embodiments of the present invention will be described below with reference to the accompanying drawings.

### First Embodiment

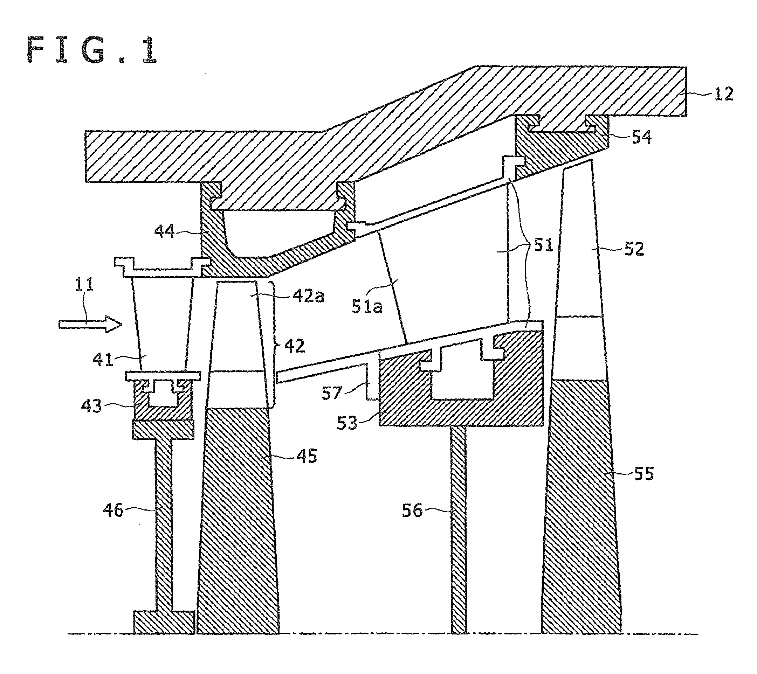

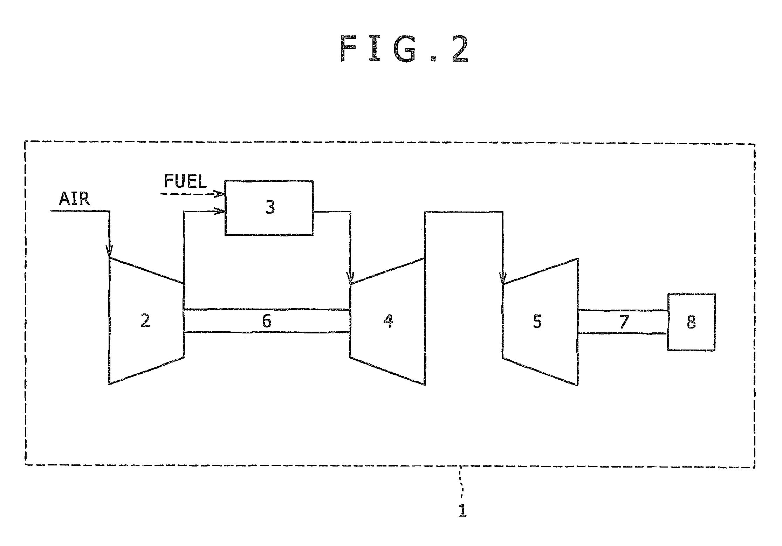

Fig. 1 shows a meridional cross-section of the outline of a final stage of a high-pressure turbine and an initial stage of a low-pressure turbine in a two-shaft gas turbine according to a first embodiment of the present invention. Fig. 2 shows a configuration diagram of a cycle of the two-shaft gas turbine according to this embodiment.

First, the outline of the cycle will be described with reference to Fig. 2. In a two-shaft gas turbine 1, a working fluid flows into a combustor 3 after having flown into an axial flow compressor 2 so as to be compressed. In the combustor 3, fuel is injected to generate a combustion gas high in temperature. The high-temperature and high-pressure gas flows into a high-pressure turbine 4 connected to the compressor 2 through a shaft 6 which is a first shaft to drive the compressor 2, and thereafter flows into a low-pressure turbine 5. When the working fluid passes through the low-pressure turbine 5, a power generator 8 connected to the low-pressure turbine 5 through a shaft 7 that is a second shaft is driven to implement power generation.

The configuration of the neighborhoods of the final stage of the high-pressure turbine 4 and the initial stage of the low-pressure turbine 5 will be described with reference to Fig. 1. Referring to Fig. 1, the high-pressure turbine final stage includes a final-stage stator vane 41, a final-stage rotor vane 42, a final-stage stator vane diaphragm 43, a final-stage rotor vane casing shroud 44, and a high-pressure turbine rotor 45. On the other hand, the low-pressure turbine initial stage includes an initial-stage stator vane 51, an initial-stage rotor vane 52, an initial-stage stator vane diaphragm 53, an initial-stage rotor vane casing shroud 54, and a low-pressure turbine rotor 55. The low-pressure turbine rotor 55 and the high-pressure turbine rotor 45 have the respective different rotating shafts, and rotate independently. Also, a spacer 46 is fitted to an inner peripheral side of the high-pressure turbine final-stage stator vane diaphragm 43, and a plate-like partition 56 is fitted to an inner peripheral side of the low-pressure turbine initial-stage stator vane diaphragm 53. The partition 56 fitted to the low-pressure turbine side prevents the travel of the working fluid at a portion other than the flow channel. It is assumed that a component of the above-mentioned flow channel is of a segment structure in which the component is divided into plural pieces in the circumferential direction.

Referring to Fig. 1, the outer peripheral side of a flow channel through which a main gas 11 being a combustion gas high in temperature and pressure passes is configured by the high-pressure turbine final-stage stator vane 41, the final-stage rotor vane casing shroud 44, the low-pressure turbine initial-stage stator vane 51, and the initial-stage rotor vane casing shroud 54 in the stated order. The inner peripheral side of the flow channel is configured by the high-pressure turbine final-stage stator vane 41, the final-stage rotor vane 42, an intermediate flow channel member 57, the low-pressure turbine initial-stage stator vane 51, and the initial-stage rotor vane 52 in the stated order. The intermediate flow channel member 57 is connected to the low-pressure turbine initial-stage stator vane diaphragm 53 through a bolt or the like (not shown). It is assumed that the configuration of the intermediate flow channel member 57 is of a circular truncated cone enlarged in a downstream direction. It is assumed that the configuration of the high-pressure turbine final-stage rotor vane casing shroud 44 is of a cylinder on the upstream side where the final-stage rotor vane 42 is located, and of a circular truncated cone enlarged toward the downstream side on the downstream side. As usual, an intermediate connection region exists between the cylindrical portion and the circular truncated conical portion of the final-stage rotor vane casing shroud 44 so that the flow channel configuration becomes smooth, but is not shown in the figure. Further, it is desirable that a slope of the circular truncated conical portion of the final-stage rotor vane casing shroud 44 is larger than a slope of the circular truncated conical portion of the above-mentioned intermediate flow channel member 57. This is because the above configuration enables the sectional area of the flow channel to naturally monotonically increase.

Also, in Fig. 1, the high-pressure turbine final-stage rotor vane casing shroud 44 and the low-pressure turbine initial-stage rotor vane casing shroud 54 are held by a casing 12. In this embodiment, the casing 12 is shared by the high-pressure turbine 4 and the low-pressure turbine 5. Alternatively, an outer casing can be divided into a high-pressure turbine casing and a low-pressure turbine casing, and the final-stage rotor vane casing shroud 44 and the initial-stage rotor vane casing shroud 54 can be held by the respective outer casings without any structural problem. With the above configuration, there is advantageous in that replacement and inspection are facilitated such that only the low-pressure turbine side can be taken apart when any trouble occurs on the low-pressure turbine side. In this case, it is desirable that a connection portion of the outer casings is received by the outer peripheral sides of the casing shrouds 44 and 54 in the axial direction. This is because the divided portion can be fixed by the shrouds 44 and 54. However, because the number of parts increases by dividing the casing 12, the casing 12 is advantageously shared by the high-pressure turbine 4 and the low-pressure turbine 5 from the viewpoints of the costs and the operability.

Now, the specific operation of the two-shaft gas turbine 1 according to this embodiment will be described. During rated operation, the working fluid passes through the axial flow compressor 2 and the combustor 3, and flows into the high-pressure turbine 4 as a high-temperature and high-pressure combustion gas. A temperature at this time is about 1300°C. The combustion gas that has flown into the high-pressure turbine 4 acts on the combustion gas that has flown into the high-pressure turbine 4 to decrease the pressure and the temperature, and reaches the inlet of the high-pressure turbine final-stage stator vane. The arrived main gas 11 flows into the high-pressure turbine final stage to drive the high-pressure turbine final-stage rotor vane 42 and the low-pressure turbine initial-stage rotor vane 52, and finally changes to a gas that is about 500°C, and is exhausted from the low-pressure turbine 5. The rotor vanes of the low-pressure turbine 5 including the low-pressure turbine initial-stage rotor vane 52 are driven to rotate the power generator 8 through the low-pressure turbine rotor 55 and the shaft 7 which are connected thereto, thereby obtaining electric power. In this embodiment, it is assumed that the number of rotation of the power generator is 3600 rpm (60 Hz).

In the two-shaft gas turbine according to this embodiment, in order to decrease the entire size, the number of rotation of the high-pressure turbine rotor 45 is set to be larger than the number of rotation of the low-pressure turbine rotor 55. In this case, in order to equalize a centrifugal stress exerted on the rotor vane between the high-pressure turbine side and the low-pressure turbine side, on at least one of the inner peripheral side or the outer peripheral side of the flow channel of the main gas 11, the high-pressure turbine outlet must be made lower than the low-pressure turbine inlet. In this embodiment, that the high-pressure turbine outlet or the low-pressure turbine inlet is high or low means that a radial distance from each rotating shaft is long or short. In the gas turbine according to this embodiment, a height of the flow channel of the high-pressure turbine outlet is lower in the inner peripheral side and the outer peripheral side than a height of the flow channel of the low-pressure turbine inlet.

In the above the two-shaft gas turbine, a change in the sectional area of the flow channel between the high-pressure turbine final-stage rotor vane 42 and the low-pressure turbine initial-stage stator vane 51 is highest as compared with that between other adjacent rotor vanes and stator vanes. When an angle formed between the flow direction of the main gas 11, and the outer peripheral side wall and the inner peripheral side wall of that flow channel is increased, the aerodynamic loss is increased. In order to suppress an increase in the aerodynamic loss, it is desirable that an axial distance between a position of the center of gravity of a high-pressure turbine final-stage rotor vane main body 42a and a position of the center of gravity of a low-pressure turbine initial-stage stator vane main body 51a is made longer than the distances between the centers of gravity of the other adjacent rotor vanes and stator vanes.

In this embodiment, the high-pressure turbine outlet means a rear edge of the high-pressure turbine final-stage rotor vane main body 42a in the flow direction of the main gas 11. Likewise, the low-pressure turbine inlet means a front edge of the low-pressure turbine initial-stage stator vane main body 51a.

With the above configuration, when most of the flow channel on the outer peripheral side of the low-pressure turbine inlet from the high-pressure turbine final-stage outlet is configured by the high-pressure turbine final-stage rotor vane casing shroud 44 in the shape of the above-mentioned circular truncated cone, the flow on the outer peripheral side can be prevented from being disturbed. Further, when the intermediate flow channel member 57 in the shape of the above-mentioned circular truncated cone is used for the inner peripheral side wall of the flow channel, the sectional area of the flow channel in the axial direction of the low-pressure turbine inlet from the high-pressure turbine final-stage outlet can be monotonically increased while suppressing the disturbance of the flow on the inner peripheral side. The monotonic increase in the sectional area of the flow channel means that no portion of the minimum sectional area exists in the flow channel of the low-pressure turbine inlet from the high-pressure turbine final-stage outlet. When a portion of the minimum sectional area exists in a certain portion of the flow channel, there is a risk that the flow exceeding 1 in Mach number occurs to generate a shock wave. That is, when the sectional area of the flow channel is held constant or monotonically increased in the flow direction of the main gas 11, the flow channel doesn't function as a throated nozzle during operation of the device including a partial load, and the possibility that a perpendicular shock wave is generated to increase the loss can be removed.

Also, in the two-shaft gas turbine according to this embodiment, the high-pressure turbine final-stage rotor vane casing shroud 44 is elongated, and the flow channel on the outer peripheral side of the low-pressure turbine inlet from the high-pressure turbine final-stage outlet is configured by only the final-stage rotor vane casing shroud 44 and the low-pressure turbine initial-stage stator vane. With this configuration, as compared with a case in which the flow channel on the outer peripheral side of the low-pressure turbine inlet from the high-pressure turbine final-stage outlet is configured by other parts, an increase in the number of parts and a decrease in the number of working processes are achieved, and a leakage of the flow due to the gap or the step can be reduced.

Further, in the two-shaft gas turbine according to this embodiment, the connection position of the casing shroud 44 and the low-pressure turbine initial-stage stator vane 51 is closer to the low-pressure turbine initial-stage stator vane inlet than the high-pressure turbine final-stage rotor vane outlet. With this configuration, as compared with a case in which the outer peripheral side of the low-pressure turbine initial-stage stator vane 51 is elongated to configure the outer peripheral side flow channel of the low-pressure turbine inlet from the high-pressure turbine final-stage outlet as with the gas turbine disclosed in JP-A-2008-82323, the axial length of the initial-stage stator vane 51 is reduced so the complication of the shape can be suppressed. As usual, the turbine stator vane is a precision casting vane. In the gas turbine according to this embodiment, precision casing equipment such as dies can be prevented from increasing in size due to an increase in the size of the vanes, and the casting precision can be prevented from being reduced due to the complicated shape. On the other hand, since the final-stage rotor vane casing shroud 44 has no vane, the complicated shape by the elongation is minimized, and an increase in the manufacturing costs can be suppressed. Also, the connection position of the initial-stage stator vane 51 and the final-stage rotor vane casing shroud 44 is closer to the initial-stage stator vane main body 51a side than that in JP-A-2008-82323; therefore, when a thermal expansion difference occurs between the connection position and the initial-stage stator vane 51, a stress exerted on the outer peripheral side front edge portion of the initial-stage stator vane 51 can be reduced.

Also, in the two-shaft gas turbine according to this embodiment, the casing shroud 44 and the low-pressure turbine initial-stage stator vane 51, which are the components of the flow channel extending from the high-pressure turbine final stage to the low-pressure turbine initial stage, are of a segment structure in which those components are divided into plural pieces in the circumferential direction. With this configuration, the distortion of the entire flow channel when the flow channel is thermally expanded is reduced by gaps between the respective parts. This makes it difficult to make the flow channel nonuniform, and makes it possible to suppress a loss caused by the nonuniformity of the inflow angle in the circumferential direction.

As described above, in the two-shaft gas turbine according to this embodiment, the outer periphery of the flow channel of the main gas 11 which connects the high-pressure turbine outlet and the low-pressure turbine inlet is configured by the casing shroud 44 that is supported by the casing 12 and located on the outer peripheral side of the final-stage rotor vane 42 of the high-pressure turbine. The connection position of the casing shroud 44 and the low-pressure turbine initial-stage stator vane 51 is configured to be closer to the low-pressure turbine initial-stage stator vane inlet than the high-pressure turbine final-stage rotor vane outlet. Specifically, the low-pressure turbine initial-stage stator vane 51 is supported by the casing shroud 44 that is a first casing shroud, and a casing shroud 54 that is a second casing shroud which is supported by the casing 12 and located on the outer peripheral side of the low-pressure turbine initial-stage rotor vane 52. With this configuration, the manufacturing costs of the low-pressure turbine initial-stage stator vane 51 can be suppressed, and the reliability can be improved as compared with JP-A-2008-82323. Also, as compared with a case in which different parts are used for the flow channel on the outer peripheral side of the low-pressure turbine inlet from the high-pressure turbine final-stage outlet, the number of parts and the number of working processes can be reduced, and the aerodynamic performance can be improved. Further, because the flow channel configurations of the outer peripheral side and the inner peripheral side of the low-pressure turbine inlet from the high-pressure turbine final-stage outlet are shaped in the circular truncated cone, and the slope of the outer peripheral side is larger than that of the inner peripheral side, a change in the sectional area of the flow channel is monotonically increased while suppressing the disturbance of the flow, and the aerodynamic performance at any time including the time of the partial load can be improved.

The two-shaft gas turbine according to this embodiment can be downsized without requiring a reducer as compared with the single-shaft gas turbine. For that reason, the two-shaft gas turbine is useful in updating a plant limited in the size. In this case, the turbine portion of the existing single gas turbine is divided into a high-pressure turbine connected to the same shaft as that of a compressor, and a low-pressure turbine connected to a shaft different from the rotating shaft of the high-pressure turbine. On at least one of the inner peripheral side and the outer peripheral side of the main flow channel, the high-pressure turbine outlet is lower than the low-pressure turbine inlet. The outer peripheral side configuration of the flow channel that connects the high-pressure turbine outlet and the low-pressure turbine inlet is formed so that the first casing shroud supported by the casing and located on the outer peripheral side of the final-stage rotor vane of the high-pressure turbine, and the low-pressure turbine initial-stage stator vane are connected at a position closer to the low-pressure turbine initial-stage stator vane inlet than the high-pressure turbine final-stage rotor vane outlet.

### Second Embodiment

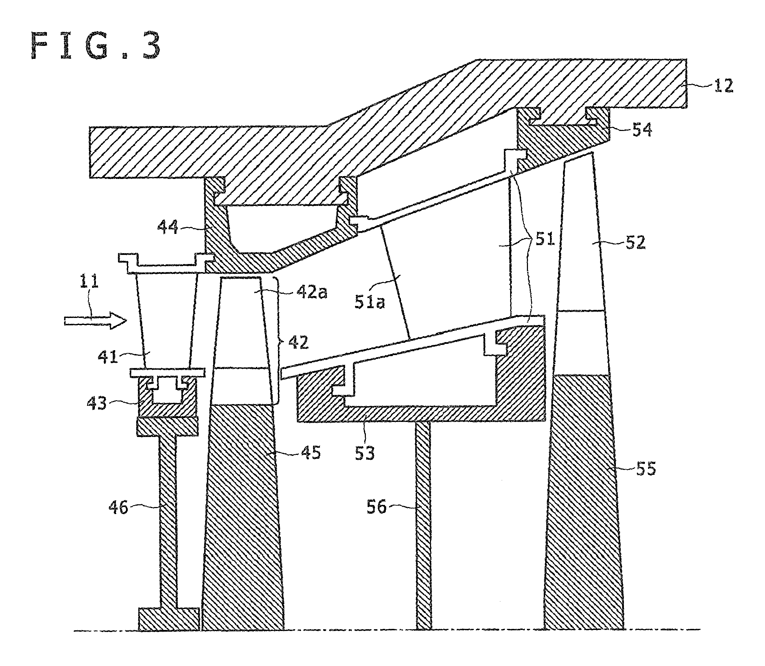

Fig. 3 shows a schematic diagram illustrating a meridional section of the outline of a high-pressure turbine final stage and a low-pressure turbine initial stage in a two-shaft gas turbine according to this embodiment. A difference from the first embodiment resides in that no intermediate flow channel member 57 is disposed in the inner peripheral side flow channel of the low-pressure turbine inlet from the high-pressure turbine final-stage outlet, and the flow channel is configured by only the low-pressure turbine initial-stage stator vane 51. The same parts as those in Fig. 1 are denoted by identical reference numerals, and their detailed description will be omitted.

In the two-shaft gas turbine according to this embodiment shown in Fig. 3, no intermediate flow channel member 57 exists, and an inner periphery of a flow channel that connects the high-pressure turbine outlet and the low-pressure turbine inlet is configured by only the low-pressure turbine initial-stage stator vane 51. For that reason, no joint portion exists in the flow channel on the inner peripheral side between the high-pressure turbine final stage and the low-pressure turbine initial stage, and the aerodynamic loss can further be reduced as compared with the first embodiment. Also, this embodiment contributes to the reduction in the costs and the number of working processes due to the reduction in the number of parts.

On the other hand, as compared with the gas turbine according to the first embodiment, because the inner peripheral side flow channel of the low-pressure turbine inlet from the high-pressure turbine final-stage outlet is configured by the low-pressure turbine initial-stage stator vane 51, there is a risk that the precision casting property of the initial-stage stator vane 51 is deteriorated. However, since the flow channel outer peripheral side of the low-pressure turbine inlet from the high-pressure turbine final-stage outlet is not configured by the initial-stage stator vane 51 as with the gas turbine disclosed in JP-A-2008-82323, the connection position of the initial-stage stator vane 51 and the final-stage rotor vane casing shroud 44 is close to the initial-stage stator vane main body 51a side as compared with the gas turbine of JP-A-2008-82323. For that reason, as in the first embodiment, when a thermal expansion difference occurs between the connection position and the initial-stage stator vane 51, a stress of the outer peripheral side front edge portion of the initial-stage stator vane 51 can be reduced. On the other hand, because the connection portion on the inner peripheral side is not supported by a member on the upstream side as with the outer peripheral side, but supported by the diaphragm 53, no excessive stress occurs in the stator vane front edge portion due to the thermal expansion difference.

In brief, in the gas turbine according to this embodiment, although there is a possibility that the costs increase due to a reduction in the precision casting property as compared with the first embodiment, it can be expected to reduce the number of parts and the number of working processes due to simplification. Also, since no intermediate flow channel member 57 is provided, the occurrence of the flow loss due to the step or the like can be suppressed. The reliability is as high as that in the first embodiment.

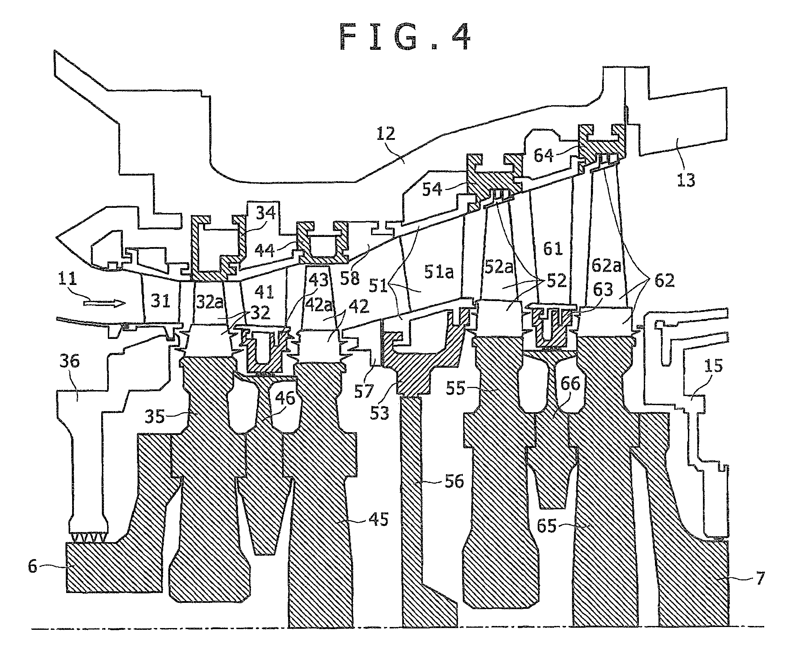

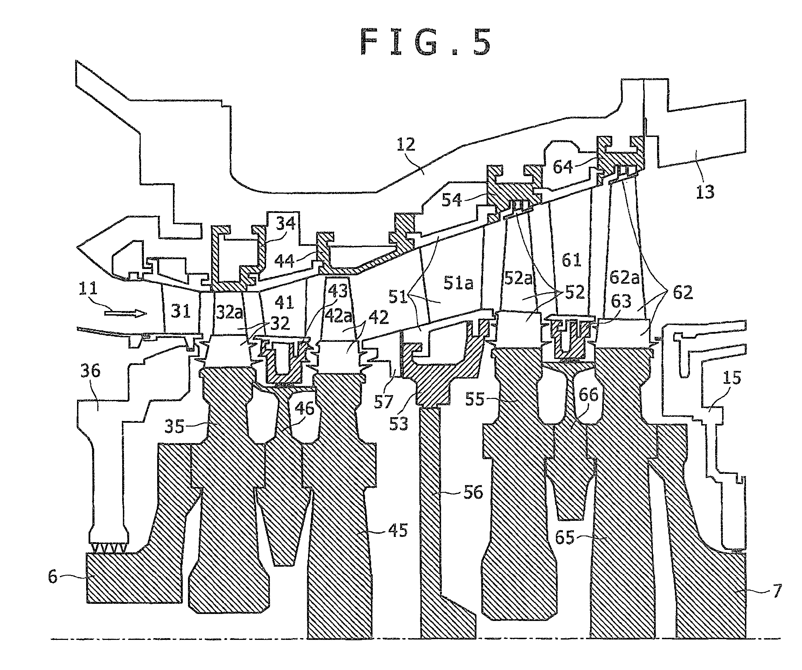

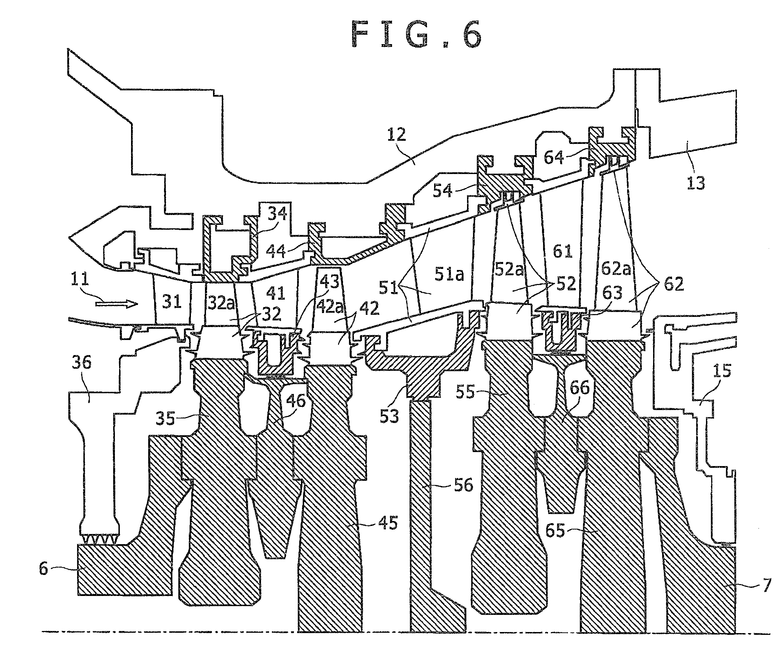

Now, differences from the conventional art will be described in detail with reference to Figs. 4 to 6. Fig. 4 is a detail diagram of a meridional section of a turbine side of a two-shaft gas turbine in a comparative example, Fig. 5 is a detail diagram of a meridional section of the turbine side of the two-shaft gas turbine in the first embodiment, and Fig. 6 is a detail diagram of a meridional section of the turbine side of the two-shaft gas turbine in the second embodiment.

First, the configuration of the two-shaft gas turbine will be described with reference to Fig. 4. As described above, in the two-shaft gas turbine, the turbine portion is made up of the high-pressure turbine 4 and the low-pressure turbine 5. The high-pressure turbine 4 includes an initial-stage stator vane 31, an initial-stage rotor vane 32, a second-stage stator vane 41, a second-stage rotor vane 42, an initial-stage rotor vane casing shroud 34, a second-stage rotor vane casing shroud 44, an initial-stage rotor 35, a second-stage rotor 45, an initial-stage stator vane inner peripheral side support member 36, a second-stage stator vane spacer 46, a second-stage stator vane diaphragm 43, and a high-pressure turbine shaft 6. On the other hand, the low-pressure turbine 5 includes a third-stage stator vane 51, a third-stage rotor vane 52, a fourth-stage stator vane 61, a fourth-stage rotor vane 62, a third-stage rotor vane casing shroud 54, a fourth-stage rotor vane casing shroud 64, a third-stage rotor 55, a fourth-stage rotor 65, a third-stage stator vane inner peripheral side support member 53, a fourth-stage stator vane diaphragm 63, a partition 56, a fourth-stage stator vane spacer 66, an inner peripheral side intermediate flow channel member 57, an outer peripheral side intermediate flow channel member 58, and a low-pressure turbine shaft 7. The initial-stage rotor vane casing shroud 34, the second-stage rotor vane casing shroud 44, the third-stage rotor vane casing shroud 54, and the fourth-stage rotor vane casing shroud 64 are supported by an outside-turbine casing 12, and the hook-shaped shrouds are hooked on the casing 12 so as to be held. In Fig. 4, the number of the stages of the high-pressure turbines 4 and the number of the stages of the low-pressure turbines 5 are each two. However, the number of the respective turbines may be larger or smaller than two without any problem. Also, the outside-turbine casing 12 may be divided on the high-pressure turbine side and the low-pressure turbine side.

Subsequently, a flow of combustion gas will be described. A high-pressure and high-temperature gas 11 that has passed through the combustor 3 passes through a flow channel which is made up of the initial-stage stator vane 31, the initial-stage rotor vane 32, the second-stage stator vane 41, the second-stage rotor vane 42, the third-stage stator vane 51, the third-stage rotor vane 52, the fourth-stage stator vane 61, the fourth-stage rotor vane 62, the initial-stage rotor vane casing shroud 34, the second-stage rotor vane casing shroud 44, the third-stage rotor vane casing shroud 54, the fourth-stage rotor vane casing shroud 64, the inner peripheral intermediate flow channel member 57, and the outer peripheral side intermediate flow channel member 58 to drive the rotor vanes, and discharges the gas 11 as an exhaust side casing exhaust gas.

As described above, in the general two-shaft gas turbine, because the low-pressure turbine 5 is smaller in the number of rotation than the high-pressure turbine 4, the radial position on the inner peripheral side of the high-pressure turbine initial-stage stator vane, that is, the third-stage stator vane 51 is higher than the radial position on the inner peripheral side of the high-pressure turbine final-stage rotor vane, that is, the second-stage rotor vane 42. For that reason, an intermediate flow channel that connects those vanes is required, and an inter-vane distance between the high-pressure turbine final-stage rotor vane and the low-pressure turbine initial-stage stator vane needs to be made longer than other inter-vane distances. This is because when a distance of the intermediate flow channel is too short, there is a risk that a tilt angle of the axial direction of the intermediate flow channel (hereinafter referred to as "flare angle") becomes large, and the flow loss is increased. The flare angle needs to be within a range of from 10° to 30° based on the results of studying whether separation is made, or not, through the performance and flow analysis of gas turbines of the same type.

Conventionally, when the above-mentioned intermediate flow channel is provided, the intermediate flow channel member 58 is generally disposed for the outer peripheral side as in the comparative example shown in Fig. 4. This is because the shroud is of a structure for suppressing heat radiation in the flow channel, which is frequently made of a high-class material, and the provision of the inexpensive intermediate flow channel member 58 is superior to the shroud from the viewpoint of the costs.

However, the present inventors have attained knowledge that the above configuration suffers from two problems. First, one problem is caused by a fact that the second-stage rotor vane casing shroud 44 is of a segment structure divided in the peripheral direction whereas the outer peripheral side intermediate flow channel member 58 is of a ring structure or a half-division structure in which half peripheral parts are integrated together. Because the different structures exist together, a difference occurs in thermal expansion, resulting in such a problem that the flow channel is distorted. In the second-stage rotor vane shroud of the segment structure, a direction of expansion caused by a heat from the main flow is limited to the circumferential direction, and no radial expansion occurs. On the contrary, in the outer peripheral side intermediate flow channel member of the ring structure or the half-division structure, an expansion occurs in the radial direction. For this reason, there is a risk that a step occurs between the outer peripheral side intermediate flow channel member 58 and the second-stage rotor vane casing shroud 44, or asperity occurs in the flow channel configured by the outer peripheral side intermediate flow channel member 58 so that flow is separated. In particular, this influence remarkably appears in the two-shaft gas turbine. In the two-shaft gas turbine, in order to balance the energies of the high-pressure turbine and the low-pressure turbine, the opening degree of a compressor inlet guide vane (IGV) is changed to adjust the flow rate. When a loss occurs in the turbines, the flow rate is reduced, and the energy balance is lost with the result that the output and the efficiency are greatly reduced. In the single-shaft gas turbine where the turbine is not divided into the high pressure side and the low pressure side, it is difficult to lose the turbine balance.

The other problem resides in the strength of the hook for holding the second-stage rotor vane casing shroud 44. In general, a rotation moment occurs in the rotor vane shroud, and a stress caused by the moment is received by the outside-turbine casing. Because the moment can be regarded as a product of a distance between hooks of the upstream side and the downstream side and the generated stress, when the moment is held constant, a load received by the casing is larger as the distance between the hooks is shorter. That is, in order to ensure the intensity of the hooks, a given axial distance is required. For that reason, in order to ensure the limit of the above-mentioned flare angle, it is necessary to make the axial distance long.

Those two problems can be solved by elongating the second-stage rotor vane casing shroud 44 instead of the use of the intermediate flow channel member 58 as in the respective embodiments shown in Figs. 5 and 6. The first problem on the flow channel configuration can be solved by providing the second-stage rotor vane casing shroud 44 with the segment structure. In this structure, there is no thermal expansion in the radial direction, and the possibility that the flow is separated during operation can be reduced.

Also, in the respective embodiments, because the second-stage rotor vane casing shroud 44 is elongated, the axial distance between the hooks becomes large so that a stress exerted on the casing can be reduced. As a result, as shown in Figs. 5 and 6, a structure in which the second-stage rotor vane casing shroud 44 is angled immediately downstream of the second-stage rotor vane 42 with respect to the shaft can be provided. For that reason, the limit of the flare angle can be satisfied even at a short distance, and the axial distance can be minimized. Even in the structure of the comparative example of Fig. 4, the second-stage rotor vane casing shroud 44 can be slightly elongated so that the second-stage rotor vane casing shroud 44 is angled immediately downstream of the second-stage rotor vane 42 with respect to the shaft can be provided. However, in such a case, the configuration of the second-stage rotor vane casing shroud 44 is substantially identical with the configurations shown in Figs. 5 and 6. For that reason, a working labor is increased by the provision of the intermediate flow channel member 58, which is considered to be not preferable.

As described above, in the respective embodiments of the present invention, the strength of the hook structure of the second-stage rotor vane casing shroud 44 can be ensured while suppressing the deterioration of aerodynamic performance as compared with the structure using the conventional intermediate flow channel member 58. Further, because the axial distance of the intermediate flow channel can be minimized while ensuring the flare angle in a range that does not affect the aerodynamic performance, the effects of achievement of downsizing and an improvement in the reliability of a shaft are high.
Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A two-shaft gas turbine, comprising:
a compressor (2) that compresses air;
a combustor (3) that burns the air compressed by the compressor (2) and fuel to generate a combustion gas, a high-pressure turbine (4) that is driven by the combustion gas generated by the combustor (3); and
a low-pressure turbine (5) that is driven by a gas exhausted from the high-pressure turbine (4),
in which a first shaft (6) which is a shaft of the compressor (2) and the high-pressure turbine (4), and a second shaft (7) which is a shaft of the low-pressure turbine (5) are different from each other,
wherein on at least one of an inner peripheral side or an outer peripheral side of a main flow passage, an outlet of the high-pressure turbine (4) is lower than an inlet of the low-pressure turbine (5),
wherein an outer periphery of a flow channel that connects the outlet of the high-pressure turbine (4) and the inlet of the low-pressure turbine (5) includes a first casing shroud (44) that is supported by a casing (12) and located on an outer peripheral side of a final-stage rotor vane (42) of the high-pressure turbine (4), and the initial-stage stator vane (51) of the low-pressure turbine, and
wherein a connection position of the first casing shroud (44) and the initial-stage stator vane (51) of the low-pressure turbine (5) is closer to the inlet of the initial-stage stator vane (51) of the low-pressure turbine (5) than the outlet of the final-stage rotor vane (42) of the high-pressure turbine (4).

2. The two-shaft gas turbine according to claim 1, wherein a configuration of the flow channel that connects the outlet of the high-pressure turbine (4) and the inlet of the low-pressure turbine (5) is constant or monotonically increased in a sectional area of the flow channel.

3. The two-shaft gas turbine according to claim 1 or 2, wherein an outer peripheral configuration of the flow channel that connects the outlet of the high-pressure turbine (4) and the inlet of the low-pressure turbine (5) includes at least a circular truncated cone enlarged toward the downstream side.

4. The two-shaft gas turbine according to at least one of claims 1 to 3, further comprising:
a second casing shroud (54) that is supported by the casing (12) and located on the outer peripheral side of the initial-stage rotor vane (52) of the low-pressure turbine (5),
wherein the initial-stage rotor vane (52) of the low-pressure turbine (5) is supported by the first casing shroud (44) and the second casing shroud (54).

5. The two-shaft gas turbine according to at least one of claims 1 to 4, wherein the first casing shroud (44) and the initial-stage rotor vane (51) of the low-pressure turbine (5) are divided into a plurality of segments as a segment structure.

6. The two-shaft gas turbine according to at least one of claims 1 to 5, wherein the casing (12) includes a low-pressure turbine casing and a high-pressure turbine casing.

7. The two-shaft gas turbine according to at least one of claims 1 to 6, wherein an inner peripheral configuration of the flow channel that connects the outlet of the high-pressure turbine (4) and the inlet of the low-pressure turbine (5) includes a circular truncated cone enlarged toward the downstream side.

8. The two-shaft gas turbine according to at least one of claims 1 to 7, wherein an outer peripheral configuration of the flow channel that connects the outlet of the high-pressure turbine (4) and the inlet of the low-pressure turbine (5) includes at least a circular truncated cone enlarged toward the downstream side, and
wherein a slope of the circular truncated conical portion of the inner peripheral side of the flow channel that connects the outlet of the high-pressure turbine (4) and the inlet of the low-pressure turbine (5) with respect to the shaft is smaller than a slope of the circular truncated conical portion of the outer peripheral side.

9. The two-shaft gas turbine according to at least one of claims 1 to 8, wherein an inner periphery of the flow channel that connects the outlet of the high-pressure turbine (4) and the inlet of the low-pressure turbine (5) is made up of only the initial-stage stator vane (51) of the low-pressure turbine (5).

10. The two-shaft gas turbine according to at least one of claims 1 to 9, wherein an axial distance between the position of the center of gravity of the final-stage rotor vane (42) of the high-pressure turbine (4) and the position of the center of gravity of the initial-stage stator vane (51) of the low-pressure turbine (5) is longer than distances between other adjacent rotor vanes (32, 52, 62) and stator vanes (31, 41, 61).

11. A method of altering a single-shaft gas turbine having a compressor (2) that compresses air, a combustor (3) that burns the air compressed by the compressor (2) and fuel to generate a combustion gas, and a turbine (4, 5) that is driven by the combustion gas generated by the combustor (3), the method comprising:
dividing the turbine (4, 5) into a high-pressure turbine (4) connected to the compressor (2) by the same shaft (6), and a low-pressure turbine (5) connected to a shaft (7) different from a rotating shaft (6) of the high-pressure turbine (4);
on at least one of an inner peripheral side or an outer peripheral side of a main flow passage, making an outlet of the high-pressure turbine (4) lower than an inlet of the low-pressure turbine (5); and
forming an outer periphery of a flow channel that connects the outlet of the high-pressure turbine (4) and the inlet of the low-pressure turbine (5) by connecting a first casing shroud (44) that is supported by a casing (12) and located on an outer peripheral side of a final-stage rotor vane (42) of the high-pressure turbine (4), and the initial-stage stator vane (51) of the low-pressure turbine (5) at a position closer to the inlet of the initial-stage stator vane (51) of the low-pressure turbine (5) than the outlet of the final-stage rotor vane (42) of the high-pressure turbine (4).
